# FASCICULE DE BREVET EUROPEEN

(11) **EP 1 702 795 B1**
(45) Date de publication et mention de la délivrance du brevet: **01.09.2010**
(21) Numéro de dépôt: 06290337.2
(22) Date de dépôt: 28.02.2006
(51) Int. Cl.: B60Q 1/04

(54) **Système de fixation d'un projecteur sur un bouclier de véhicule routier et procédé d'installation et de fixation du projecteur sur le bouclier**
Einrichtung bzw. Verfahren zur Befestigung eines Scheinwerfers an einer Stossstange eines Kraftfahrzeuges
Device and method for fixing a headlamp in a vehicle bumper

(30) Priorité: 15.03.2005 FR 0502548
(43) Date de publication de la demande: 20.09.2006
(73) Titulaire: VALEO VISION, 93012 Bobigny Cedex (FR)
(72) Inventeur: Dinant, Franck, 1460 Virginal (BE)

(56) Documents cités:
- DE-A1- 4 311 419
- DE-A1- 19 649 582
- US-A1- 2002 131 272
- US-B1- 6 199 817

## Description

### Domaine de l'invention

L'invention concerne un système de fixation d'un projecteur sur un bouclier de véhicule routier. L'invention s'applique aux véhicules routiers, notamment, aux véhicules poids lourds et aux véhicules tout-terrain équipés d'un bouclier. Elle trouve des applications, en particulier, pour une installation et une fixation rapide, avec possibilité de démontage, d'un projecteur sur le bouclier du véhicule.

L'invention concerne également un véhicule routier comportant un tel système de fixation.

Elle concerne aussi un procédé d'installation et de fixation d'un projecteur sur un bouclier de véhicule routier.

### Etat de la technique

Dans le domaine des véhicules routiers, on connaît différents types de dispositifs de fixation d'un projecteur sur un bouclier, parmi lesquels on trouve des dispositifs de fixation à vis ou à baïonnette.

Ces dispositifs de fixation, à vis ou à baïonnette, d'un projecteur sur un bouclier de véhicule routier nécessitent, de la part de l'utilisateur, une série de mouvements de rotations, lors du montage ou du démontage du projecteur sur le bouclier, dans un environnement peu accessible, ce qui rend ces mouvements difficiles et pénibles à réaliser pour l'utilisateur.

Il existe par ailleurs un dispositif de fixation d'un projecteur sur un bouclier de véhicule qui remédie à ces inconvénients. Un tel dispositif est décrit dans le document DE -A- 19632688. Ce dispositif de fixation comporte une barre de fixation coudée. Cette barre de fixation a un levier de basculement destiné à entraîner le basculement de la barre coudée. Ce levier a une position dans laquelle le projecteur est fixé au bouclier et une position différente dans laquelle le projecteur est poussé vers l'extérieur pour son démontage. Lors de la fixation du projecteur sur le bouclier, le levier est basculé de façon à faire basculer la barre coudée dans une position de maintien du projecteur. Ce dispositif présente l'inconvénient de nécessiter un mouvement de rotation de la part de l'utilisateur pour faire basculer le levier. Le mouvement de rotation que doit faire l'utilisateur est de 180 degrés. Et, du fait de l'environnement peu accessible du bouclier, ce mouvement de rotation est difficile et pénible à réaliser pour l'utilisateur.

### Exposé de l'invention

L'invention a justement pour but de remédier aux inconvénients des techniques exposées précédemment. Pour cela, l'invention propose un système de fixation d'un projecteur sur un bouclier de véhicule routier, dans lequel le bouclier comporte un logement pour le projecteur, délimité par des parois. Le bouclier comporte au moins une glissière fixée sur une de ses parois. Le système de fixation comporte un levier rigide monté sur une des parois du bouclier. Ce levier est accessible à l'utilisateur. Le système de fixation comporte un loquet permettant le blocage du projecteur dans le logement du bouclier. Ce système de fixation du projecteur sur le bouclier du véhicule routier permet un montage et un démontage rapide, du projecteur sur le bouclier du véhicule routier, avec un mouvement de rotation inférieur à 90 degrés. En outre, ce système de fixation permet de terminer l'installation du projecteur mécaniquement, et non manuellement, ce qui assure un positionnement correct du projecteur dans le logement.

Plus précisément, l'invention concerne un système de fixation d'un projecteur sur un bouclier de véhicule routier, le bouclier comportant des parois délimitant un logement apte à recevoir le projecteur, ledit système comportant un levier, mobile en rotation, monté, par une de ses extrémités, sur une paroi du bouclier, et qui comporte un loquet articulé sur le levier, par une première extrémité, et ayant une seconde extrémité apte à être bloquée contre une première butée du projecteur.

L'invention peut comporter également une ou plusieurs des caractéristiques suivantes :
- une articulation assurant une liaison articulée entre le levier et le loquet.
- un moyen élastique fixé, d'une part, sur le levier et, d'autre part, sur le loquet.
- le levier a une forme en L.
- l' articulation est installée sur un angle du levier en L.
- la première butée du projecteur est réalisée dans une pièce ou ensemble de butée installée sur le projecteur.
- la pièce/ensemble de butée comporte une seconde butée apte à bloquer le levier.
- la pièce de butée comporte une cavité formant la première et la seconde butées.
- des moyens pour verrouiller le loquet dans une position de blocage contre la première butée du projecteur.

L'invention concerne également un procédé d'installation et de fixation d'un projecteur sur un bouclier qui comporte les opérations suivantes :
- installation du projecteur sur au moins une glissière du bouclier, à une entrée du logement du bouclier,
- poussée du projecteur vers le fond du logement du bouclier, provoquant une levée d'un loquet et une compression d'un moyen élastique,
- levée du levier provoquant un abaissement du loquet,
- abaissement du levier jusqu'à ce que, d'une part, le loquet entre en contact avec une première butée du projecteur et, d'autre part, le levier entre en contact avec une seconde butée du projecteur,
- dépassement d'un point de verrouillage du loquet entraînant le verrouillage du projecteur sur le bouclier.

L'invention concerne également un véhicule routier qui comporte au moins un système de fixation d'un projecteur sur un bouclier de véhicule routier, selon l'invention.

### Brève description des dessins

La figure 1 représente, selon une vue en coupe, un exemple non limitatif d'un système de fixation d'un projecteur sur un bouclier, selon l'invention.

Les figures 2, 3, 4 et 5 montrent différentes étapes d'installation et de fixation du projecteur sur le bouclier, selon le procédé de l'invention.

La figure 6 représente, schématiquement, le système de fixation de l'invention avec des moyens pour verrouiller le loquet.

### Description détaillée de modes de réalisation de l'invention

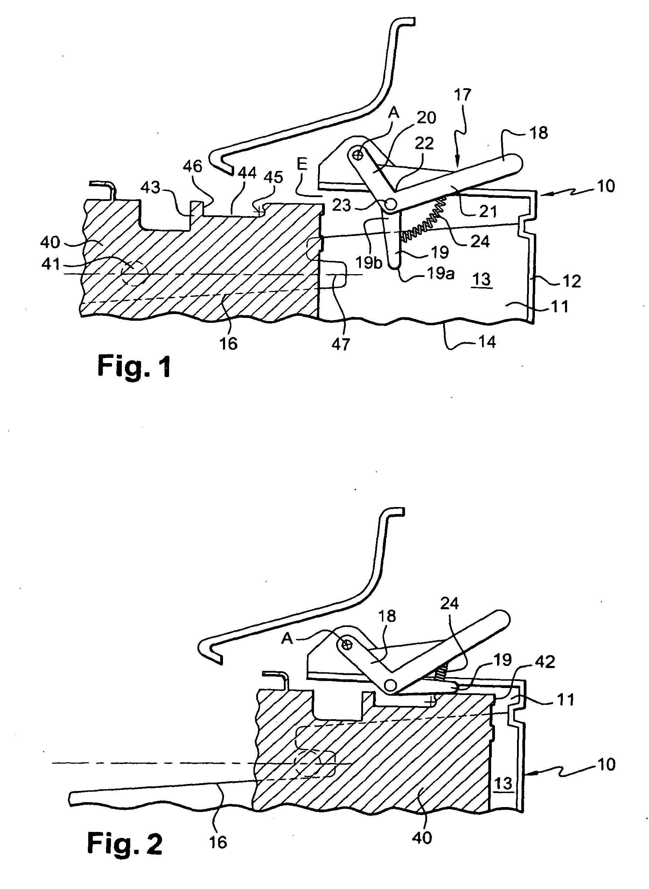

La figure 1 représente, selon une vue en coupe, un exemple d'un système de fixation d'un projecteur sur un bouclier, selon l'invention. Le bouclier est un large pare-chocs, enveloppant une partie de la carrosserie du véhicule routier et permettant de protéger le véhicule des chocs pouvant survenir. Le bouclier est monté, généralement, sur la carrosserie du véhicule routier. Il est, en général, réalisé dans un matériau plastique comportant des renforts métalliques. Comme montré sur la figure 1, le bouclier 10 comporte au moins un logement 11. Chaque logement 11 est destiné à recevoir un projecteur 40. Le logement 11 est une cavité non débouchante pratiquée dans le bouclier 10; il est délimité par des parois 12, 13, 14. La paroi 12 constitue le fond du logement 11 et les parois 13 et 14 constituent, respectivement, le toit et le plancher dudit logement. Le logement 11 comporte une ouverture en regard de la paroi 12 formant une face d'entrée E.

Le bouclier 10 comporte au moins une glissière 16. Dans l'exemple de la figure 1, le bouclier 10 comporte deux glissières latérales, dont une seule, la glissière 16, est représentée. La glissière 16 est réalisée sur la paroi 13, et l'autre glissière est en vis-à-vis de la glissière 16 sur la paroi latérale opposée à la paroi 13 et non représentée. Ces glissières assurent le guidage du projecteur 40 dans le logement 11 du bouclier 10. Elles permettent un déplacement longitudinal du projecteur 40 dans le logement 11. Autrement dit, elles permettent de déplacer le projecteur de l'entrée E vers le fond 12. Dans une variante, les glissières sont des pièces rapportées sur les parois latérales du bouclier 10. Les glissières sont de préférence réalisées dans un matériau rigide.

La figure 1 montre le système de fixation 17, dans le bouclier. Ce système de fixation 17 est monté sur le bouclier 10 dans le but de fixer le projecteur 40 sur le bouclier 10. Ce système de fixation 17 comporte un levier rigide 18 et un loquet articulé 19.

Le levier 18 est un organe mobile dont la mise en action provoque le fonctionnement du loquet 19. Le levier 18 est monté par une de ses extrémités autour d'un axe de rotation A. Le levier 18 est manoeuvrable à la main par l'utilisateur. Le levier 18 a pour rôle d'amplifier les efforts reçus par la manoeuvre de l'utilisateur.

Dans l'exemple de la figure 1, le levier 18 est un élément rigide, de forme non rectiligne, comportant deux bras formant un angle non plat. Dans un mode de réalisation préféré, le levier 18 a une forme en L. Le levier 18 comporte deux bras 20 et 21 formant un angle 22. La longueur du bras manoeuvrable 21 est supérieure à la longueur du bras rotatif 20, pour faciliter sa manoeuvre. Le bras manoeuvrable 21 est accessible à l'utilisateur et manoeuvrable à la main. Le bras manoeuvrable 21 fournit la puissance au levier 18. Le bras rotatif 20 est fixé sur une des parois du bouclier 10. Dans un exemple préféré, le bras rotatif 20 est fixé sur la paroi 13 du bouclier 10.

Le levier 18 est soumis à deux forces, l'une motrice et l'autre résistante. Dans l'exemple de la figure 1, la force motrice est donnée par l'effort fourni par le bras manoeuvrable 21 et la force résistante est donnée par le bras rotatif 20 fixé sur la paroi 13. Lorsque le bras manoeuvrable 21 est en mouvement, le bras rotatif 20 tourne autour de l'axe de rotation A.

Le loquet 19 est une tige rigide, mobile, permettant de verrouiller le projecteur sur le bouclier. Le loquet 19 est destiné à maintenir le projecteur 40 dans un état de verrouillage. Le loquet 19 peut être réalisé avec le même matériau que le matériau du levier 18.

Le loquet 19 est relié, par une seconde de ses extrémités 19 b, au levier 18. Le loquet 19 est relié au levier 18 par une articulation au moyen d'une articulation 23. Cette articulation 23 est une pièce de forme généralement cylindrique permettant la rotation du loquet 19 sur le levier 18, lorsque ledit levier est en mouvement.

Le système de fixation 17 comporte également un moyen élastique 24, de type ressort, placé de préférence entre le bras manoeuvrable 21 du levier 18 et le loquet 19. Comme expliqué de façon plus détaillée par la suite, ce moyen élastique 24 est destiné à ramener le loquet 19 à sa position initiale, telle que représentée en figure 1, lorsque l'utilisateur a cessé d'exercer une pression sur le bras manoeuvrable 21 du levier 18.

Le projecteur 40 comporte une première butée 45 destinée à bloquer le loquet 19 et une seconde butée 46 destinée à bloquer le levier 18. Dans le cas d'un levier en L, la seconde butée bloque l'angle 22 du levier 18. Ces deux butées 45 et 46 peuvent être des saillies réalisées sur le projecteur 40, lors de la fabrication dudit projecteur.

Dans une variante, ces butées 45 et 46 sont réalisées sur une pièce/un ensemble de butée 43 installée sur le projecteur 40. Cette pièce de butée 43 peut être fixée sur un projecteur 40 existant. Cette pièce de butée 43 peut être réalisée dans le même matériau que celui du projecteur 40. Dans une première variante, la pièce de butée 43 comporte deux saillies formant la première butée 45 et la seconde butée 46.

Dans une seconde variante, la pièce de butée 43 comporte une cavité 44 réalisée dans l'épaisseur de ladite pièce de butée. La cavité 44 peut avoir une forme rectangulaire ou tout autre forme comportant deux parois formant la première butée 45 et la seconde butée 46.

Dans l'exemple de la figure 1, la paroi de la cavité 44 formant la première butée 45 a une forme arrondie, au niveau de son angle de liaison avec le fond de la cavité 44. Cette forme arrondie est adaptée à recevoir et à bloquer la première extrémité 19a du loquet 19 de forme arrondie. La paroi de la cavité 44 formant la seconde butée 46 a une forme plane, au niveau de son angle de liaison avec le fond de la cavité 44. Cette forme plane est adaptée à bloquer la forme plane de l'angle 22 du levier 18. La première butée 45 et la seconde butée 46 ont des formes adaptées, respectivement, à la forme du loquet 19 et à la forme de la partie du levier 18 bloquée par la seconde butée 46, par exemple à la forme de l'angle 22 dans le cas de la figure 1.

Dans l'exemple de la figure 1, le système de fixation 17 est en position de repos. Le projecteur 40 est à l'extérieur du logement 11 du bouclier 10. Le projecteur 40 est installé sur les glissières 16 avant d'être enfoncé dans le logement 11 du bouclier 10.

Les figures 2, 3, 4, et 5 représentent le système de fixation de la figure 1 dans plusieurs positions. En particulier, la figure 2 montre une première étape d'installation et de fixation du projecteur sur le bouclier, selon le procédé de l'invention. L'utilisateur place tout d'abord le projecteur 40 sur les glissières latérales 16 avant de pousser ledit projecteur vers le fond 12 du logement 11.

Lors de l'introduction du projecteur 40 dans le logement 11 du bouclier 10, une extrémité haute 42 du projecteur 40 soulève le loquet 19, mobile autour de la articulation 23, ce qui entraîne une compression du moyen élastique 24. Le mouvement du loquet 19 peut entraîner également une légère rotation du bras manoeuvrable vers le haut.

L'utilisateur enfonce ensuite le projecteur 40 dans le logement 11 du bouclier 10 jusqu'à ce que le loquet 19 atteigne une position limite. Cette position limite est la position extrême que le loquet 19 peut avoir, par rapport au levier 18. Cette position limite est atteinte lorsque le moyen élastique 24 est comprimé au maximum.

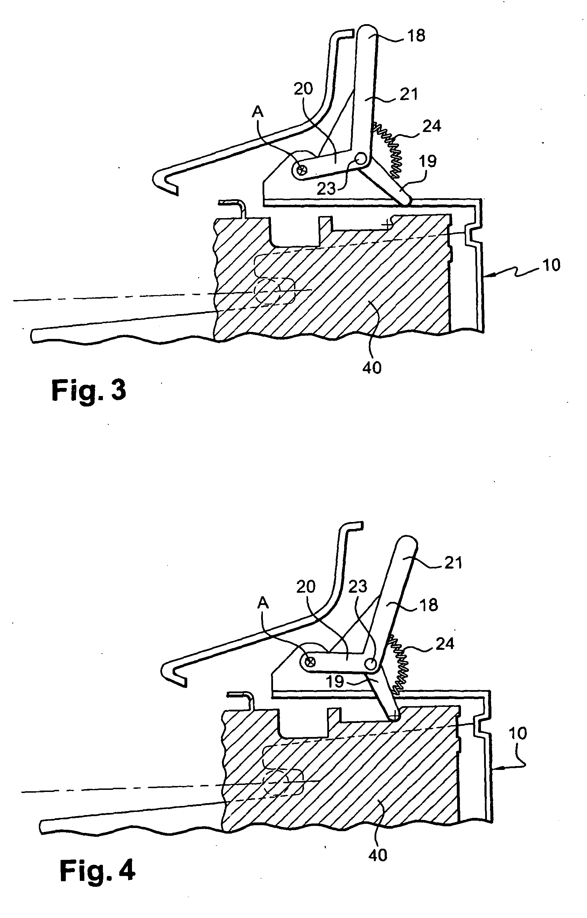

Lorsque le loquet 19 a atteint sa position limite, l'utilisateur peut finir l'installation du projecteur 40 dans le bouclier 10 et verrouiller le positionnement du projecteur 40 au moyen du système de fixation 17. Cette fin d'installation et ce verrouillage se déroulent en plusieurs étapes comme le montrent les figures 3, 4 et 5.

La figure 3 montre une deuxième étape d'installation et de fixation du projecteur sur le bouclier selon le procédé de l'invention. L'utilisateur lève, vers le haut, le bras manoeuvrable 21 du levier 18 jusqu'à une position quasi verticale. Cette levée du bras manoeuvrable 21 du levier 18 entraîne un mouvement de rotation du bras rotatif 20 autour de l'axe de rotation A. La liaison articulée du levier 18 avec le loquet 19, par la articulation 23, provoque un mouvement d'abaissement du loquet 19, lors de la levée du bras manoeuvrable 21 du levier 18. Cet abaissement du loquet 19 est entraîné par la décompression du moyen élastique 24 vers sa position initiale.

Pour une levée du bras manoeuvrable 21 vers une position quasi verticale, l'utilisateur réalise un mouvement de rotation inférieur à 90 degrés, de l'ordre de 60 degrés. Cet angle est suffisamment faible pour donner à l'utilisateur l'impression de réaliser un mouvement de translation vers le haut. Ce mouvement est relativement facile à réaliser pour l'utilisateur, dans l'environnement peu accessible du bouclier 10.

La figure 4 montre une troisième étape d'installation et de fixation du projecteur sur le bouclier, selon le procédé de l'invention. Lorsque le loquet 19 est abaissé, l'utilisateur abaisse le bras manoeuvrable 21 du levier 18. Cet abaissement du bras manoeuvrable 21 du levier 18 entraîne une rotation du loquet 19 vers le projecteur 40 jusqu'à ce que le loquet 19 entre en contact avec la première butée 45 du projecteur 40. Cette première butée 45 assure un blocage du loquet 19, l'empêchant de dépasser une position limite basse.

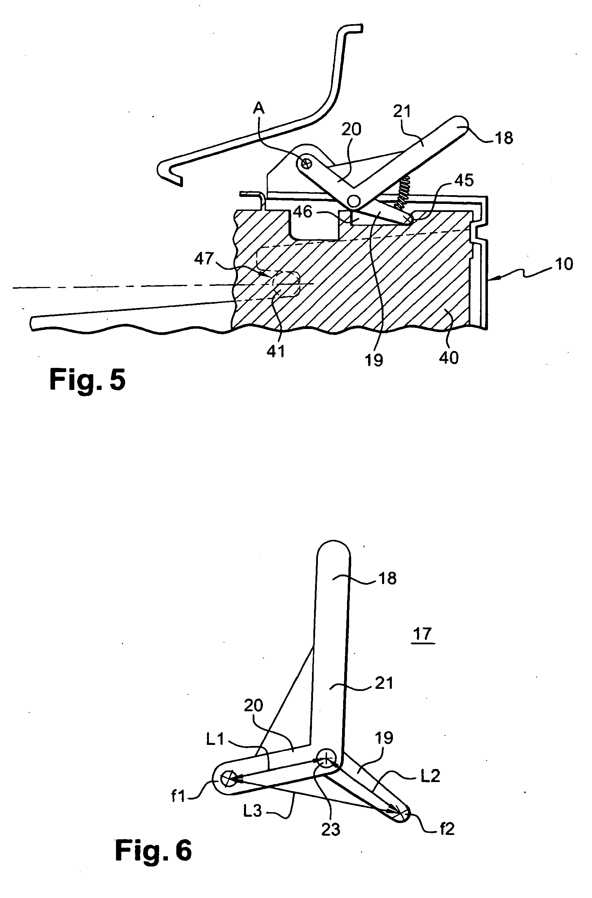

La figure 5 montre une dernière étape d'installation et de fixation du projecteur sur le bouclier selon le procédé de l'invention. Lorsque le loquet 19 est bloqué contre la première butée 45, l'utilisateur peut continuer d'abaisser le bras manoeuvrable 21 du levier 18, ce qui entraîne un déplacement en rotation du bras rotatif 20 du levier 18 autour de l'axe de rotation A ainsi qu'une transmission de la force reçue par le loquet 19 au projecteur 40. Cette force a pour effet de pousser le projecteur 40 vers le fond 12 du logement 11 du bouclier 10, terminant ainsi l'installation du projecteur 40 dans le bouclier 10. En continuant d'abaisser le bras manoeuvrable 21 du levier 18, l'angle 22 du levier 18 entre en contact avec la seconde butée 46 du projecteur 40. Cette seconde butée 46 bloque le mouvement de rotation du levier 18, ce qui arrête sa rotation. Le projecteur 40 est alors fixé dans le bouclier.

Le positionnement du projecteur 40 dans le bouclier 10 peut ensuite être verrouillé, en verrouillant le loquet 19. Autrement dit, le blocage du projecteur 40 sur le bouclier 10 n'est verrouillé que lorsque le loquet 19 a dépassé un point de verrouillage, appelé aussi point dur.

Dans un mode de réalisation, le système de fixation 17 comporte un organe de guidage 41 fixé sur le projecteur 40. Cet organe de guidage 41 est destiné à se loger dans une chambre 47 réalisée en fin de glissière 16 du bouclier 10. L'organe de guidage 41 est réalisé dans un matériau relativement déformable. Lors de l'enfoncement du projecteur 40 dans le logement 11 du bouclier 10 par l'utilisateur, l'organe de guidage 41 entre dans la chambre 47 et sert de butée à l'enfoncement manuel du projecteur 40. Autrement dit, l'organe de guidage 41 sert de repère d'insertion à l'utilisateur. Lors de la fin de l'installation du projecteur 40 dans le bouclier 10, c'est à dire la poussée mécanique du projecteur 40 contre la paroi 12 du bouclier 10, l'organe de guidage 41 se déforme sensiblement pour entrer au fond de la chambre 47.

La figure 6 représente, schématiquement, le levier 18 avec le loquet 19. Elle explique notamment la notion de point de verrouillage.

Dans l'exemple de la figure 6, le bras rotatif 20 du levier 18 a une longueur L1. Le loquet 19 a une longueur L2. La somme des longueurs L1 et de L2 est supérieure à une longueur L3. Cette longueur L3 est la distance entre une extrémité f1 du bras rotatif 20 du levier 18 et une extrémité f2 du loquet 19. Cette différence de longueur entre L1+L2 et L3 doit être compensée. Cette compensation de la différence de longueur est obtenue dès que le loquet 19 a passé le point de verrouillage, ou point dur. Le passage du point de verrouillage est réalisé par des moyens de verrouillage du loquet 19. Ces moyens de verrouillage compensent la différence de longueur entre L1+ L2 et L3.

Dans un mode de réalisation, ces moyens de verrouillage sont constitués par le matériau formant le bouclier 10. Dans ce cas, la différence de longueur est compensée par une déformation du bouclier lui même. Dans un autre mode de réalisation, les moyens de verrouillage consistent en un ou plusieurs ressorts (non représentés) fixés sur le bouclier.

Le passage du point de verrouillage est ressenti, par l'utilisateur, comme une résistance du système, suivie immédiatement par un relâchement du système de fixation 17. Autrement dit, lorsque la rotation du levier 18 est arrêtée par la seconde butée 46 et que l'utilisateur continue d'abaisser le bras manoeuvrable 21, il rencontre, à un moment, une certaine résistance du bras manoeuvrable 21. Cette résistance correspond au dépassement du point de verrouillage du loquet 19.

On comprend que plus la différence entre L1+L2 et L3 est grande, plus le point de verrouillage est important et nécessite un appui plus fort de l'utilisateur sur le levier 18.

Tant que le point de verrouillage n'est pas dépassé, le projecteur 40 n'est pas verrouillé sur le bouclier 10. Le dépassement du point de verrouillage permet de maintenir le projecteur 40 dans sa position, quelles que soient les vibrations du véhicule en déplacement.

Le système de fixation 17 de l'invention a l'avantage de permettre un démontage facile du projecteur 40 hors du bouclier 10. Ainsi, lorsque l'utilisateur veut démonter le projecteur du bouclier, il actionne le bras manoeuvrable 21 du levier 18 vers le haut jusqu'à ce que le loquet 19 dépasse le point de verrouillage. Dès que le point de verrouillage est passé, le système de fixation 17 est déverrouillé. L'utilisateur continue à actionner le bras manoeuvrable 21 du levier 18 vers le haut, provoquant une rotation vers le haut du bras rotatif 20 suivant l'axe de rotation A. Cette rotation du bras rotatif 20 entraîne le retrait du loquet 19 hors de la première butée 45. Le projecteur 40 peut alors être retiré du logement 11 du bouclier 10.

Lors du démontage du projecteur, l'utilisateur doit réaliser un mouvement de rotation d'un angle inférieur à 90 degrés, comme dans le cas du montage. Cet angle est suffisamment faible pour donner à l'utilisateur la sensation qu'il effectue un mouvement de translation vers le haut, ce qui est simple à réaliser dans un espace difficile d'accès et relativement exigu.

## Revendications

1. Système de fixation d'un projecteur (40) sur un bouclier (10) de véhicule routier comprenant un projecteur (40) et un bouclier (10), le bouclier (10) comportant des parois (12, 13, 14) délimitant un logement (11) apte à recevoir le projecteur (40), ledit système comportant un levier (18), mobile en rotation, monté, par une de ses extrémités, sur une paroi du bouclier (10),
**caractérisé en ce qu'**il comporte un loquet (19) articulé sur le levier (18) par une première extrémité (19b) et ayant une seconde extrémité (19a) apte à être bloquée contre une première butée (45) du projecteur (40).

2. Système selon la revendication 1, **caractérisé en ce qu'**il comporte un moyen élastique (24) fixé, d'une part, sur le levier (18) et, d'autre part, sur le loquet (19).

3. Système selon l'une quelconque des revendications 1 à 2, **caractérisé en ce qu'**il comporte une articulation (23) entre le levier (18) et le loquet (19).

4. Système selon l'une quelconque des revendications 1 à 3, **caractérisé en ce que** le levier (18) a une forme en L.

5. Système selon les revendications 3 et 4, **caractérisé en ce que** l' articulation (23) est installée dans un angle (22) du levier (18) en L.

6. Système selon l'une quelconque des revendications 1 à 5, **caractérisé en ce que** la première butée (45) du projecteur (40) est réalisée dans une pièce de butée (43) installée sur le projecteur (40).

7. Système selon l'une des revendications précédentes, **caractérisé en ce que** le projecteur (40) comporte une seconde butée (46) apte à bloquer le levier (18).

8. Système selon les revendications 6 et 7, **caractérisé en ce que** la pièce de butée (43) comporte une cavité formant la première (45) et la seconde (46) butées.

9. Système selon l'une quelconque des revendications 1 à 8, **caractérisé en ce qu'**il comporte des moyens pour verrouiller le loquet (19) dans une position de blocage contre la première butée (45) du projecteur (40).

10. Procédé d'installation et de fixation d'un projecteur sur un bouclier de véhicule routier au moyen du système de fixation selon l'une quelconque des revendications 1 à 9, **caractérisé en ce qu'**il comporte les opérations suivantes :
- installation du projecteur (40) sur au moins une glissière (16) du bouclier (10), à une entrée (E) du logement (11) du bouclier (10),
- poussée du projecteur (40) vers le fond du logement (11) du bouclier (10), provoquant une levée d'un loquet (19) et une compression d'un moyen élastique (24),
- levée du levier (18) provoquant un abaissement du loquet (19),
- abaissement du levier (18) jusqu'à ce que, d'une part, le loquet (19) entre en contact avec une première butée (45) du projecteur (40) et, d'autre part, le levier (18) entre en contact avec une seconde butée (46) du projecteur (40),
- dépassement d'un point de verrouillage du loquet (19) entraînant le verrouillage du projecteur (40) sur le bouclier (10).

11. Véhicule routier comportant un bouclier et au moins un projecteur, **caractérisé en ce qu'**il comporte un système de fixation selon l'une quelconque des revendications 1 à 9.

## Claims

1. System for securing a headlight (40) onto a bumper (10) of a road vehicle, comprising a headlight (40) and a bumper (10), the bumper (10) comprising walls (12, 13, 14) which delimit a receptacle (11) which can receive the headlight (40), the said system comprising a lever (18) which is mobile in rotation, and is fitted at one of its ends onto a wall of the bumper (10), **characterised in that** it comprises a latch (19) which is articulated on the lever (18) by a first end (19b), and has a second end (19a) which can be locked against a first stop (45) of the headlight (40).

2. System according to claim 1, **characterised in that** it comprises a resilient means (24) which is secured firstly on the lever (18), and secondly on the latch (19).

3. System according to either of claims 1 or 2, **characterised in that** it comprises an articulation (23) between the lever (18) and the latch (19).

4. System according to any one of claims 1 to 3, **characterised in that** the lever (18) is in the form of an "L".

5. System according to claims 3 and 4, **characterised in that** the articulation (23) is installed in an angle (22) of the lever (18) in the form of an "L".

6. System according to any one of claims 1 to 5, **characterised in that** the first stop (45) of the headlight (40) is produced in a stop part (43) which is installed on the headlight (40).

7. System according to any one of the preceding claims, **characterised in that** the headlight (40) comprises a second stop (46) which can lock the lever (18).

8. System according to claims 6 and 7, **characterised in that** the stop part (43) comprises a cavity which forms the first (45) and second (46) stops.

9. System according to any one of claims 1 to 8, **characterised in that** it comprises means for locking the latch (19) in a locking position against the first stop (45) of the headlight (40).

10. Method for installation and securing of a headlight onto a bumper of a road vehicle by means of the securing system according to any one of claims 1 to 9, **characterised in that** it comprises the following operations:
- installation of the headlight (40) on at least one slide (16) of the bumper (10), at an intake (E) of the receptacle (11) in the bumper (10);
- thrusting the headlight (40) towards the base of the receptacle (11) in the bumper (10), thus giving rise to lifting of a latch (19) and compression of a resilient means (24);
- lifting of the lever (18), thus giving rise to lowering of the latch (19);
- lowering of the lever (18) until, firstly, the latch (19) comes into contact with a first stop (45) of the headlight (40), and secondly, the lever (18) comes into contact with a second stop (46) of the headlight (40) ; and
- going beyond a point of locking of the latch (19), thus giving rise to locking of the headlight (40) onto the bumper (10).

11. Road vehicle comprising a bumper and at least one headlight, **characterised in that** it comprises a securing system according to any one of claims 1 to 9.

## Patentansprüche

1. Einrichtung zum Befestigen eines Scheinwerfers (40) an einem Stoßfänger (10) eines einen Scheinwerfer (40) und einen Stoßfänger (10) umfassenden Kraftfahrzeugs, wobei der Stoßfänger (10) Wandungen (12, 13, 14) aufweist, die einen Sitz (11) zur Aufnahme des Scheinwerfers (40) umgrenzen, wobei die Einrichtung einen drehbeweglichen Hebel (18) umfasst, der mit einem seiner Enden an einer Wandung des Stoßfängers (10) angebracht ist,
**dadurch gekennzeichnet, dass** sie einen Riegel (19) umfasst, der mit einem ersten Ende (19b) an dem Hebel (18) angelenkt ist und ein zweites Ende (19a) aufweist, das an einem ersten Anschlag (45) des Scheinwerfers (40) festgeklemmt zu werden vermag.

2. Einrichtung nach Anspruch 1,
**dadurch gekennzeichnet, dass** sie ein elastisches Mittel (24) umfasst, das einerseits am Hebel (18) und andererseits am Riegel (19) befestigt ist.

3. Einrichtung nach einem der Ansprüche 1 bis 2,
**dadurch gekennzeichnet, dass** sie zwischen dem Hebel (18) und dem Riegel (19) ein Gelenk (23) umfasst.

4. Einrichtung nach einem der Ansprüche 1 bis 3,
**dadurch gekennzeichnet, dass** der Hebel (18) L-förmig ist.

5. Einrichtung nach den Ansprüchen 3 und 4,
**dadurch gekennzeichnet, dass** das Gelenk (23) in einem Winkel (22) des L-förmigen Hebels (18) angebracht ist.

6. Einrichtung nach einem der Ansprüche 1 bis 5,
**dadurch gekennzeichnet, dass** der erste Anschlag (45) des Scheinwerfers (40) in einem am Scheinwerfer (40) angebrachten Anschlagstück (43) ausgeführt ist.

7. Einrichtung nach einem der vorhergehenden Ansprüche,
**dadurch gekennzeichnet, dass** der Scheinwerfer (40) einen zweiten Anschlag (46) aufweist, der den Hebel (18) zu arretieren vermag.

8. Einrichtung nach den Ansprüchen 6 und 7,
**dadurch gekennzeichnet, dass** das Anschlagstück (43) eine Höhlung aufweist, die den ersten (45) und den zweiten (46) Anschlag bildet.

9. Einrichtung nach einem der Ansprüche 1 bis 8,
**dadurch gekennzeichnet, dass** sie Mittel zum Verrasten des Riegels (19) in einer Arretierposition am ersten Anschlag (45) des Scheinwerfers (40) aufweist.

10. Verfahren zum Anbringen und Befestigen eines Scheinwerfers an einem Stoßfänger eines Kraftfahrzeugs mittels der Befestigungseinrichtung nach einem der Ansprüche 1 bis 9 ,
**dadurch gekennzeichnet, dass** es die folgenden Schritte umfasst:
- Anbringen des Scheinwerfers (40) auf wenigstens einer Gleitfläche (16) des Stoßfängers (10) an einem Eingang (E) des Sitzes (11) des Stoßfängers (10),
- Schieben des Scheinwerfers (40) zum Grund des Sitzes (11) des Stoßfängers (10), was ein Anheben eines Riegels (19) und ein Zusammendrücken eines elastischen Mittels (24) bewirkt,
- Anheben des Hebels (18), wodurch ein Senken des Riegels (19) bewirkt wird,
- Senken des Hebels (18) bis einerseits der Riegel (19) mit einem ersten Anschlag (45) des Scheinwerfers (40) in Kontakt gelangt und andererseits der Hebel (18) mit einem zweiten Anschlag (46) des Scheinwerfers (40) in Kontakt gelangt,
- Überschreiten eines Rastpunktes des Riegels (19), was das Verrasten des Scheinwerfers (40) am Stoßfänger (10) bewirkt.

11. Kraftfahrzeug mit einem Stoßfänger und wenigstens einem Scheinwerfer, **dadurch gekennzeichnet, dass** es eine Befestigungseinrichtung nach einem der Ansprüche 1 bis 9 umfasst.
